## Europäisches Patentamt
## European Patent Office
## Office européen des brevets

(11) Veröffentlichungsnummer: **0 096 268**
**A2**

(12) **EUROPÄISCHE PATENTANMELDUNG**

(21) Anmeldenummer: 83105026.5

(22) Anmeldetag: 20.05.83

(51) Int. Cl.³: **F 16 K 47/00**
**F 16 T 1/00**

(30) Prioritat: 04.06.82 DE 3221050

(43) Veroffentlichungstag der Anmeidung:
21.12.83 Patentblatt 83.51

(84) Benannte Vertragsstaaten:
AT BE CH FR LI NL

(71) Anmelder: BROWN, BOVERI & CIE Aktiengesellschaft
Kallstadter Strasse 1
D-6800 Mannheim 31(DE)

(72) Erfinder: Weimer, Peter
Feldbergstrasse 69
D-6384 Schmitten 3(DE)

(74) Vertreter: Kempe, Wolfgang, Dr. et al,
c/o Brown, Boveri & Cie AG Postfach 351
D-6800 Mannheim 1(DE)

(54) Absperrorgan, insbesonder Absperrschieber.

(57) Um Flüssigkeitsansammlungen aus dem Totraum (26) eines Absperrorgans (8) entfernen zu können, ist dieser Totraum (26) in einen Strömungsweg eingeschaltet, der von der Zuströmseite (18) zur Abströmseite (20) des Absperrorgans fuhrt. Gleichzeitig ist in diesem Strömungsweg ein Zusatzventil (30) angeordnet, das vom Schließkörper (14) des Absperrorgans gesteuert wird. Hierbei ist die Anordnung so getroffen, daß das Zusatzventil (30) in Schließstellung des Absperrkorpers (14) ebenfalls geschlossen ist, bei der Öffnungsbewegung dagegen noch vor einer Freigabe oder zumindest vor einer wesentlichen Freigabe des Absperrorgan-Durchflusses geöffnet ist. Hierdurch wird der Differenzdruck zwischen Zuströmseite (18) und Abströmseite (20) für die Abfuhr der Flüssigkeitsansammlung ausgenutzt.

FIG.1

B R O W N ,  B O V E R I  &  C I E    AKTIENGESELLSCHAFT
Mannheim                              28. Mai 1982
Mp.-Nr. 572/82                        ZPT/P5-Wg/Hr

## Absperrorgan, insbesondere Absperrschieber

Die Erfindung betrifft ein Absperrorgan, insbesondere einen Absperrschieber, für gasförmige, vorzugsweise kondensierbare Medien, mit einem im einem Gehäuse bewegbaren Absperrkörper, der in Schließstellung die Zuströmseite des Absperrorgans von der Abströmseite trennt, in Offenstellung dagegen verbindet, sowie mit einem im Innenraum des Absperrorgans vorhandenen Totraum.

Bei Absperrorganen, insbesondere Absperrschiebern, bilden sich während des Betriebs mit kondensierbaren, dampfförmigen Medien, insbesondere Dampf, oder anderweitig flüssigkeitsführenden gasförmigen Medien Flüssigkeitsansammlungen im tiefsten Bereich des Gehäuses. Dies gilt insbesondere für das Absperrorgan in Schließstellung. Nach dem Öffnen des Absperrorgans werden diese Flüssigkeitsansammlungen oft weitgehend vom durchströmenden Medium abgeführt oder ausgetrocknet. Dies trifft jedoch nur für Absperrorgane in normaler Einbaulage, das heißt mit vertikal sich bewegendem Absperrkörper und vertikal angeordneter Betätigungsspindel zu. Ist jedoch ein solches Absperrorgan, hauptsächlich in Form eines Absperrschiebers, abweichend von der Normaleinbaulage mit geneigt oder horizontal verlaufender Spindel eingebaut, so ergeben sich weit größere mit Flüssigkeitsansammlungen gefüllte Toträume. Gleiches gilt selbst für Absperrschieber, die in normaler Einbaulage mit vertikaler Spindel in Hochdruck-Dampfleitungen eingebaut sind. Denn diese Hochdruck-Absperrorgane weisen zur Erhöhung der Festigkeit stark ausgebuchtete Gehäuseteile auf. die zu einer Vergrößerung der Toträume führen. Die sich in solchen großen Toträumen ansammelnden Flüssigkeits- bzw. Kondensatmengen können insbesondere beim Betrieb mit Hochdruck-Dampf zu Störungen und/oder Schäden führen. Dies trifft hauptsächlich dann zu, wenn die vorgeschriebene Betriebsweise der Anlage, in welcher das Absperrorgan eingefügt ist, ein allmähliches Austrocknen der Flüssigkeitsansammlung nach dem Öffnen des Absperrorgans verbietet.

Der Erfindung liegt daher die Aufgabe zugrunde, ein Absperrorgan der eingangs genannten Art anzugeben, dessen Totraum beim Öffnungsvorgang auf einfache und sichere Weise selbsttätig von Flüssigkeitsansammlungen entleert wird. Darüber hinaus soll das Absperrorgan weiterhin universell einsetzbar und den betrieblichen Forderungen, insbesondere bezüglich des Einsatzes bei hohen Drücken, voll gewachsen sein.

Die Lösung dieser Aufgabe besteht nun erfindungsgemäß darin, daß das Absperrorgan in seinem Gehäuse wenigstens ein Zusatzventil aufweist, das in einen von der Zuströmseite durch den Totraum zur Abströmseite führenden Byrass eingeschaltet und zur Steuerung mit dem Absperrkörper derart verbunden ist, daß das Zusatzventil in Schließstellung des Absperrkörpers ebenfalls geschlossel

ist, bei der Öffnungsbewegung des Absperrkörpers dagegen noch vor einer Freigabe oder zumindest vor einer wesentlichen Freigabe des Absperrorgan-Durchflusses geöffnet ist.

Der Totraum ist also Bestandteil eines Strömungsweges, der von der Zuströmseite des Absperrorgans zur Abströmseite führt. Ist das Zusatzventil geöffnet, so wird durch den Differenzdruck, der sich bei geschlossenem Absperrorgan zwischen der Zuströmseite und Abströmseite einstellt, eine Strömung ausgelöst, die Flüssigkeits- oder Kondensatansammlungen aus dem tiefsten Bereich des Totraums zur Abströmseite transportiert. Von hier wird die Flüssigkeit dann in die angeschlossene Rohrleitung mitgerissen oder verteilt, so daß eine Abfuhr und/oder Austrocknung der Flüssigkeitsmengen mit Sicherheit gegeben ist. Durch die Kopplung des Zusatzventils mit dem Absperrkörper des Absperrorgans ist gewährleistet, daß beim Öffnungsvorgang zumindest vor einer wesentlichen Freigabe des Absperrorgan-Durchflusses das Zusatzventil bereits geöffnet ist, so daß der volle Differenzdruck zur Ausbildung einer Strömung durch den Totraum bzw. zum Ausbringen von Flüssigkeiten aus dem Totraum bzw. aus dem Innenraum des Gehäuses voll ausgenutzt werden kann.

Eine vorteilhafte Weiterbildung der Erfindung kann darin bestehen, daß das Zusatzventil im Innenraum angeordnet und von der Unterkante des Absperrkörpers gesteuert ist. Zu bemerken ist noch, daß die zur Abströmseite transportierte Flüssigkeitsmengen durch meist ohnehin vorhandene Entwässerungsarmaturen der sich anschließenden Rohrleitungen gegebenenfalls aus dem System entfernt werden können.

Bei manchen Absperrorganen, z. B. Parallelplattenschiebern, ist konstruktionsbedingt eine Verbindung zwischen dem Totraum und der Zuströmseite für einen Druckausgleich vorhanden. In diesen Fällen empfiehlt es sich, daß das Zusatzventil einen mit dem tiefsten Bereich des Totraums verbundenen Einlaßkanal sowie eine zur Abströmseite führende Auslaßleitung aufweist. In diesem Falle erübrigt sich ein besonderer Anschluß des Totraums an die Zuströmseite. Im vorgenannten Fall ist es empfehlenswert, daß das Zusatzventil einen mit dem Einlaßkanal koaxialen, zylindrischen Absperrkolben aufweist, dessen auf den Einlaßkanal ausgerichtetes Ende kreiskegelförmig ausgebildet und auf einem am oberen Ende des Einlaßkanals angeordneten Absperrkolben-Sitz aufsitzt, wobei ein Auslaßkanal im Bereich des Kolbensitzes angeordnet und quer zur Kolbenachse nach außen gerichtet ist und in eine zur Abströmseite führende Auslaßleitung übergeht, und daß das obere Ende des Absperrkolbens unter Abdichtung in den Totraum geführt und unter Einschaltung eines elastischen Zwischengliedes mit der unteren Kante des Absperrkörpers in dessen Schließstellung in Berührung steht. Diese Ausführungsform ist besonders einfach und stellt nur geringe Anforderungen an die Fertigungsgenauigkeit.

Um den Absperrkolben mit der Unterkante des Absperrkörpers in Wirkverbindung zu halten, empfiehlt es sich, daß das elastische Zwischenglied einen am Ende des Absperrkolbens angeordneten Federteller aufweist, der einen nach oben weisenden Rand und einen nach unten weisenden Rand für die Führung von Schraubenfedern aufweist, von denen eine erste Schraubenfeder zwischen den Federteller und das Ventilgehäuse eingefügt ist, daß eine zweite Schraubenfeder zwischen den Federteller und einen vom oberen Rand geführten koaxialen Stößel angeordnet ist, wobei der Stößel mit dem unteren Rand des Absperrkörpers in Berührung steht und daß die erste Schraubenfeder eine größere Federkonstante als die zweite Schraubenfeder aufweist.

Ist es zulässig, oder sogar gefordert, daß eine dauernde Verbindung zwischen Abströmseite des Absperrorgans und dem Innenraum vorhanden sein kann, so ist eine sehr einfache und robuste zweite Ausführungsform der Erfindung dadurch gekennzeichnet, daß das Zusatzventil einen in einem Zylinder geführten Kolben aufweist, dessen vertikal nach oben ragende Kolbenstange mit dem Rand des Absperrkörpers in Berührung steht, wobei der Innenraum des Zylinders im Bodenbereich durch eine offene Druckleitung mit der Zuströmseite verbunden ist und im oberen Bereich eine Öffnung zum Totraum aufweist, und daß der tiefste Bereich des Totraums über eine offene Leitung mit der Abströmseite verbunden ist. Diese Ausführungsform ist auch dann einsetzbar, wenn bei geschlossenem Absperrorgan nur geringe Druckdifferenzen zwischen Zuströmseite und Abströmseite bestehen.

Darf der Innenraum bzw. Totraum bei geschlossenem Absperrorgan weder mit der Zuströmseite noch der Abströmseite in Verbindung stehen, so ist eine dritte Ausführungsform der Erfindung zu wählen, bei der das Zusatzventil einen in einem Zylinder geführten Kolben aufweist, dessen nach oben ragende Kolbenstange mit der Unterkante des Absperrkörpers in Berührung steht, wobei der Innenraum des Zylinders im Bodenbereich durch eine offene Druckleitung mit der Zuströmseite verbunden ist und im oberen Bereich einen Auslaßkanal zum Totraum aufweist und daß eine Ausströmöffnung ebenfalls im oberen Bereich des Innenraums angeordnet und eine Leitung zur Abströmseite aufweist, und daß neben der Ausströmöffnung die Öffnung eines zum tiefsten Bereich des Totraums führenden Kanals angeordnet ist, wobei die Öffnung sowie die Ausströmöffnung durch einen im Kolben ausgesparten Raum verbindbar sind.

Weitere Vorteile und Merkmale der Erfindung gehen aus
der folgenden Beschreibung von Ausführungsbeispielen in
Zusammenhang mit den schematischen Zeichnungen hervor.

Hierbei zeigen:

Fig. 1    ein Absperrorgan mit einem Zusatzventil gemäß
          der ersten Ausführungsform teilweise in einem
          vertikalen Längsschnitt,

Fig. 2    das Zusatzventil der Fig. 1 als Einzelheit in
          vergrößerter Darstellung sowie in einem vertikalen Zentralschnitt,

Fig. 3    ein Absperrorgan gemäß der zweiten Ausführungsform, teilweise im vertikalen Schnitt,

Fig. 4    den Bereich des Totraums gemäß Fig. 3 als
          Einzelheit in vergrößerter Darstellung und in
          einem vertikalen Zentralschnitt,

Fig. 5    ein Absperrorgan gemäß der dritten Ausführungsform teilweise in einem vertikalen
          Schnitt,

Fig. 6    den Bereich des Zusatzventils gemäß Fig. 5 als
          Einzelheit in vergrößerter Darstellung und in
          einem vertikalen Zentralschnitt und

Fig. 7    ein mit horizontal verlaufender Spindel ange-
          ordnetes Absperrorgan in teilweise geschnitte-
          ner Darstellung.

Gleiche Teile sind in den einzelnen Figuren mit denselben Bezugszeichen versehen. Ferner sind Teile, die sich
in den einzelnen Figuren wiederholen, nur in soweit mit
Bezugszeichen versehen, als dies für das Verständnis
erforderlich ist.

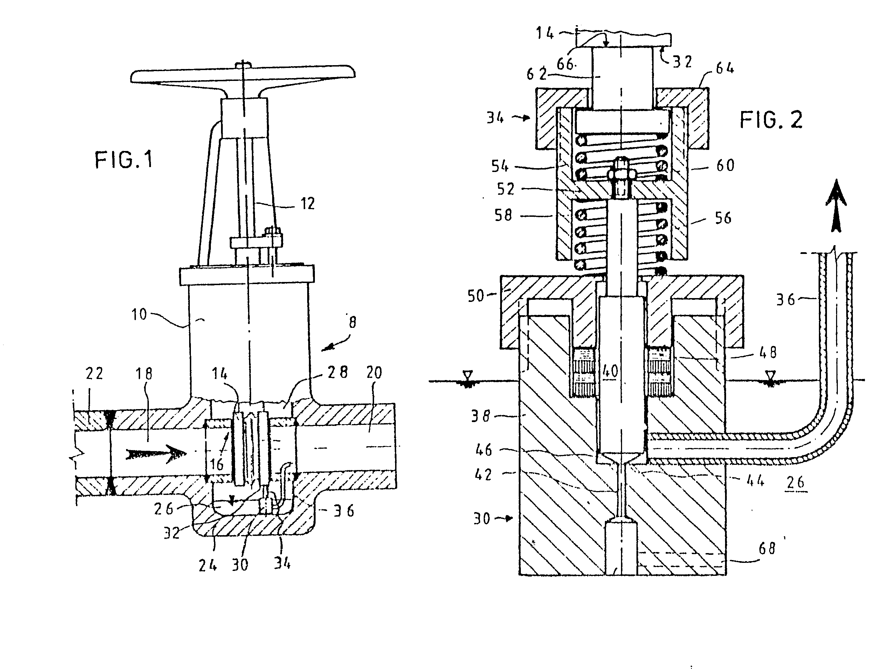

Fig. 1 zeigt ein Absperrorgan in Form eines Absperrschiebers. Man erkennt das Gehäuse 10, die Betätigungs- spindel 12 sowie den durch die Betätigungsspindel auf und ab bewegbaren Absperrkörper 14 in Form eines Schließkeiles, der bei geschlossenem Absperrorgan am Sitzring 16 dichtend anliegt. Der Absperrkörper trennt hierbei die Zuströmseite 18 von der Abströmseite 20. Diese stellen die Anschlußstutzen für Rohrleitungen dar, von denen eine Rohrleitung 22 angedeutet ist. Zur Verstärkung des Aufbaus weist das Gehäuse 10 eine Ausbuchtung 24 auf, die den Totraum 26 nach außen begrenzt. Zur Abströmseite bzw. Zuströmseite des Absperrorgans ist der Totraum 26 durch den kreisringzylindrischen Sitzring 16 sowie durch den Absperkörper 14 begrenzt. Da es sich im vorliegenden Ausführungsbeispiel um ein Absperrorgan handelt, zwischen dessen Totraum 26, der Bestandteil des Gehäuse-Innenraums 28 ist, und dessen Zuströmseite 18 Druckausgleich herrscht, besteht eine konstruktionsbedingte Verbindung zwischen der Zuströmseite und dem Totraum 26. Diese Verbindung ist in der Zeichnung nicht dargestellt.

Im Totraum 26 ist das Zusatzventil 30 angeordnet. Hierbei ist diese Anordnung so gewählt, daß das Zusatzventil 30 in der Schließstellung des Absperrkörpers ebenfalls geschlossen ist. Man erkennt das Zwischenglied 34, mit welchen das Zusatzventil 30 in Wirkverbindung mit der Unterkante 32 des Absperrkörpers steht. Zusätzlich ist die vom Zusatzventil 30 zur Abströmseite 20. führende Auslaßleitung 36 zu erkennen. Am mündungsseitigen Ende ist diese in Abströmrichtung abgebogen, so daß aus der Auslaßleitung austretende Flüssigkeit leicht abgeführt werden kann.

Der Aufbau des Zusatzventils 30 gemäß der Fig. 1 ist in der vergrößerten Schnittdarstellung gemäß Fig. 2 gut zu erkennen. Demnach weist das Zusatzventil 30 ein Ventilgehäuse 38 auf, in dem ein zylindrischer Absperrkolben 40 vertikal bewegbar ist. Das untere Ende des Absperrkolbens 40 ist kreiskegelförmig ausgebildet und auf den koaxial verlaufenden Einlaßkanal 42 ausgerichtet. Hierbei sitzt der Absperrkolben 40 auf einem Sitz 44, der am oberen Ende des Einlaßkanals gebildet ist. Am unteren Bereich des Kolbenraumes 46 ist ein quer zur Absperrkolben-Achse verlaufender Auslaßkanal vorgesehen, der in die Auslaßleitung 36 übergeht. Diese Auslaßleitung mündet auf der Abströmseite des Absperrorgans, wie aus Fig. 1 zu ersehen ist.

Zur Abdichtung des Kolbenraumes 46 ist eine Stopfbüchse 48 vorgesehen, welche den Absperrkolben umgreift und in einer kreisringförmigen Aussparung des Ventilgehäuses 38 angeordnet ist. Zum Nachstellen der Stoffbüchse 48 ist ein auf diese einwirkende Gewindering 50 vorgesehen. Anstelle der Stoffbüchse können selbstverständlich auch andere Dichtungen wie z. B. auch O-Ringe benutzt werden.

Am oberen Ende des Absperrkolbens 40, der aus dem Gehäuse 38 ragt, ist ein Federteller 52 befestigt. Dieser weist einen nach oben abgewinkelten Rand 54 sowie einen nach unten abgewinkelten Rand 56 auf. Vom unteren Rand 56 ist eine erste Schraubenfeder 58 geführt, die zwischen den Federteller 52 und dem Ventilgehäuse 38 bzw. dem Gewindering 50 angeordnet ist. Eine zweite Schraubenfeder 60 ist ebenfalls koaxial zum Absperrkolben 40 vom oberen Rand 54 geführt und stützt sich mit ihrem unteren Ende am Federteller 52 ab. Das obere Ende der zweiten Schraubenfeder 60 trägt einen vom oberen Rand 56 geführten Stößel 62, dessen Vertikalbewegung nach oben von einer Überwurfmutter 64 begrenzt ist. Die Oberkante 66 des Stößels steht in Berührung mit der Unterkante 32 des Absperrkörpers 14. Die erste Schraubenfeder 58 hat eine größere Federkonstante als die zweite Schraubenfeder 60. Im unteren Bereich des Ventilkörpers 38, nahe des Bodens, kann noch wenigstens ein horizontal verlaufender Kanal 68 vorgesehen sein, der den Einlaßkanal 42 mit dem Totraum horizontal verbindet. Der Einlaßkanal 42 bzw. der Kanal 68 mündet in den tiefsten Bereich des Totraumes 26.

Ist das Absperrorgan in einer Dampfleitung angeordnet, so kann sich im geschlossenen Zustand Kondensat im Innenraum 28 des Gehäuses bilden, das sich beim vorliegenden Einbau des Absperrorgans mit vertikal verlaufender Spindel an der tiefsten Stelle, nämlich im Totraum 26 ansammelt. Ein Eindringen von Dampf in den Innenraum 28 ist deshalb möglich, weil ein Druckausgleich zwischen der Zuströmseite 18 und dem Innenraum 28 besteht, das heißt es ist eine in der Zeichnung nicht dargestellte, konstruktionsbedingte Verbindung von der Zuströmseite 18 zum Innenraum 28 vorhanden. Bewegt sich nun beim Öffnungsvorgang des Absperrkörpers 14 dieser nach oben, so wird durch die erste Schraubenfeder 58, gegebenenfalls unter Mitwirkung des im Totraum herrschenden Druckes der Absperrkolben 40 nach oben bewegt. Hierdurch ist ein Weg freigegeben vom Totraum 26 über den Einlaßkanal 42 und/oder 68 zur Auslaßleitung 36, die zur Abströmseite 20 führt. Da das Zusatzventil bereits dann voll geöffnet hat, wenn der Durchfluß durch das Absperrorgan noch nicht oder kaum wesentlich eingesetzt hat, wird durch die Druckdifferenz zwischen Zuströmseite und Abströmseite das im Totraum angefallene Kondensat bzw. die angefallene Flüssigkeitsmenge zur Abströmseite gedrückt. Von dort wird diese in die angeschlossene Rohrleitung weitergeleitet und kann gegebenenfalls durch dort ohnehin vorhandene Flüssigkeitsabscheider aus dem Dampfkreislauf gebracht werden. Beim Schließvorgang des Absperrkörpers 14 drückt dessen unterer Rand 32 auf den Stößel 62, so daß der Absperrkolben 40 in seine Schließstellung bewegt wird, auf dem Sitz 44 aufsitzt und somit jeglicher Durchfluß durch das Absperrorgan vermieden ist.

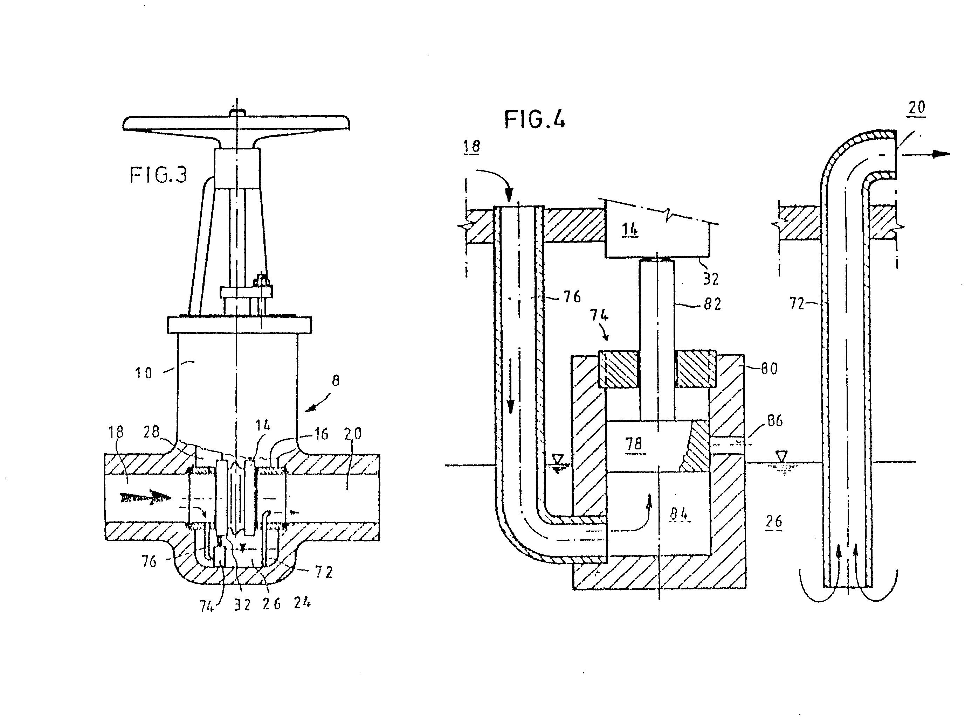

In Fig. 3 ist das Absperrorgan als Ausführungsvariante dargestellt. Während beim Ausführungsbeispiel gemäß der Fig. 1 der Innenraum des Absperrorgans bzw. der Totraum in dauernder Verbindung mit der Zuströmseite steht, sind im vorliegenden Ausführungsbeispiel diese Räume mit der Abströmseite dauernd verbunden. Hierzu ist die Leitung 72 vorgesehen, welche vom tiefsten Bereich des Totraums ausgehend den Sitzring 16 durchdringt und in die Abströmseite mündet. Das Zusatzventil 74 ist auch hier unterhalb des Schließkörpers 14 angeordnet und wird durch dessen Unterkante 32 betätigt. Der Anschluß des Zusatzventil 74 an die Zuströmseite 18 erfolgt über die Druckleitung 76, die ebenfalls den Sitzring 16 durchdringt. Die Leitung 72 muß natürlich mit Abstand vor der Wand der Ausbuchtung enden, damit die Flüssigkeit eintreten kann.

Den Aufbau des Zusatzventils samt zugeordneter Leitung 72 sowie deren Funktion sind aus der Darstellung gemäß Fig. 4 besser zu erkennen. Das Zusatzventil 74 weist hier einen Kolben 78 auf der eine starr und koaxial befestigte Kolbenstange 82 aufweist, die aus dem Zylin- der 80 ragt und mit der Unterkante 32 des Absperrkörpers 14 in Berührung steht. Im unteren Bereich des Zylinderraumes 84 ist die Druckleitung 76 angeschlossen, welche die Zuströmseite 18 mit dem Zylinderraum 84 verbindet. Im oberen Bereich des Zylinders 80 ist eine Öffnung 86 zum Totraum 16 vorgesehen. Hierbei ist die Länge der Kolbenstange 82 sowie die Gesamtausbildung so gewählt, daß in Schließstellung des Absperrkörpers 14 und bei Kontakt der Kolbenstange 82 mit der Unterkante 32 diese Öffnung 86 vom Kolben 78 versperrt wird. Aus Fig. 4 ist weiter die an den Enden offene Leitung 72 zu erkennen, die vom tiefsten Bereich des Totraums 26 zur Abströmseite 20 führt und dort in Richtung des Absperrorgan-
Durchflusses mündet.

Bei der Aufwärtsbewegung des Absperrkörpers, das heißt
beim Öffnungsvorgang, wird der Kolben 78 durch den
Druck, der auf der Zuströmseite herrscht, nach oben
gedrückt und die Öffnung 86 freigegeben. Hierdurch
lastet der Druck der Zuströmseite 18 auf der Oberfläche
der Flüssigkeitsansammlung des Totraumes und drückt
diese Flüssigkeit über die Leitung 72 zur Abströmseite.
In Schließstellung des Absperrkörpers 14 ist der Kolben
wieder in der in Fig. 4 dargestellten Lage und ein
Durchfluß von der Zuströmseite 18 zur Abströmseite 20
ist unterbrochen.

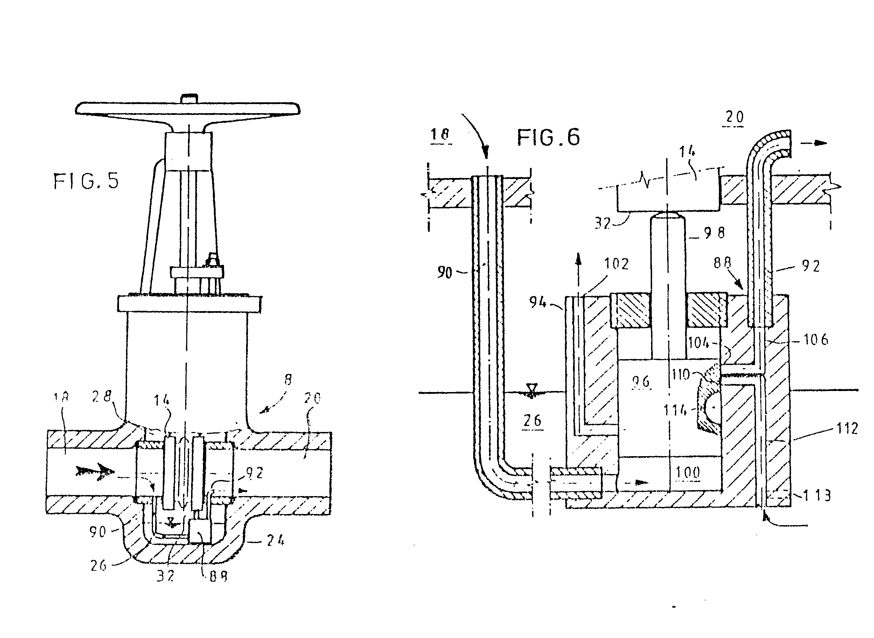

Darf der Innenraum sowie der Totraum des Absperrorgans
in Schließstellung des Absperrkörpers weder mit der
Zuströmseite 18 noch mit der Abströmseite 20 in Verbindung stehen, so ist ein Zusatzventil gemäß dem Ausführungsbeispiel der Figuren 5 und 6 zu wählen. Auch hier
ist im Totraum 26 das Zusatzventil 88 vorhanden und wird
durch die Unterkante 32 des Absperrkörpers 14 betätigt.
Wie bei den anderen Ausführungsbeispielen ist auch hier
die Betätigungsrichtung des Zusatzventils 88 identisch
mit der Bewegungsrichtung des Absperrkörpers 14. Der
Innenraum 28 und der Totraum 26 sind im vorliegenden
Ausführungsbeispiel in Schließstellung des Absperrkörpers 14 nicht mit der Zuströmseite und der Abströmseite
verbunden.

Das Zusatzventil 88 ist über die Druckleitung 90 mit der
Zuströmseite 18 und durch die Leitung 92 mit der Abströmeite 20 verbunden. Der innere Aufbau des Zusatzventils 88 sowie die Anordnung dieser Leitungen ist aus der
Darstellung gemäß Fig. 6 besser zu erkennen. Auch hier weist das Zusatzventil 88 einen Zylinder 94 auf, der einen Kolben 96 führt. An diesem ist eine nach oben aus dem Zylinder ragende Kolbenstange 98 zentrisch befestigt, deren oberes Ende mit der Unterkante 32 des Absperrkörpers 14 in Berührung steht. Der untere Bereich des Innenraums 100 ist durch die Druckleitung 90 mit der Zuströmseite 18 verbunden. Im oberen Bereich ist der Auslaßkanal 102 zum Innenraum 28 des Gehäuses bzw. zum Totraum 26 geführt. Dieser Auslaßkanal ist in der Wand des Zylinders 94 angeordnet, er verläuft zunächst in horizontaler, und dann in vertikaler Richtung, so daß seine Mündung an der Oberkante des Zylinders 94 angeordnet ist.

Desweiteren ist im oberen Bereich des Innenraums 100 eine Ausströmöffnung 104 vorgesehen. Diese ist über den in der Zylinderwand eingearbeiteten Kanal 106 sowie über die sich anschließende Leitung 92 mit der Abströmseite 20 des Absperrorgans verbunden. Neben der Ausströmöffnung 104 ist die Öffnung 110 eines zum tiefsten Bereich des Totraums 16 führenden Kanals 112 angeordnet. Dieser Kanal 112 ist ebenfalls in der Wand des Zylinders 94 ausgespart. Gegebenenfalls kann noch ein horizontaler Kanal 113 vom unteren Endbereich des Kanals 112 abzweigen und zum Totraum 26 führen.

Der Kolben 96 weist an seiner Peripherie einen ausgesparten Raum 114 auf, der bei entsprechender Kolbenstellung die Austrittsöffnung 104 mit der Öffnung 110 verbindet. In dieser Kolbenstellung ist gleichzeitig der Auslaßkanal 102 freigegeben.

In Schließstellung des Absperrkörpers 14 ist der Kolben 96 in der in Fig. 6 gezeigten Stellung. Auf der Unterseite des Kolbens 96 lastet hierbei der Druck der Anströmseite 18. Bewegt sich der Absperrkörper 14 nach oben, also aus seiner Schließstellung, so wird der Kolben 96 nach oben gedrückt. In dieser oberen Stellung ist die Verbindung vom Innenraum 100 zum Auslaßkanal 102 freigegeben und gleichzeitig die Verbindung zwischen dem Kanal 112 und dem Kanal 106 durch den Raum 114 hergestellt. Jetzt kann sich eine Strömung einstellen, die von der Zuströmseite 18, die Leitung 90, den Innenraum 100 und den Auslaßkanal 102 zum Totraum 16 führt. Hier baut sich ein Druck auf, der Flüssigkeitsansammlungen die in Fig. 6 angedeutet sind, in den Kanal 112 und/oder 113 drückt und durch den Raum 114, den Kanal 106 und die Leitung 92 zur Abströmseite 20 leitet. Hierbei ist die Anordnung so getroffen, daß bereits vor einer Freigabe des Durchflusses durch das Absperrorgan oder zumindest von einer wesentlichen Freigabe das Zusatzventil 88 voll geöffnet ist für die Abfuhr der Flüssigkeitsansammlung, es muß ein ausreichender Differenzdruck zwischen Zuströmseite 18 und Abströmseite 20 für die Abfuhr der Flüssigkeitsansammlung vorhanden sein. In Schließstellung des Absperrkörpers 14 ist der Kolben in der in Fig. 6 gezeigten Stellung. Hierbei ist jeglicher Durchfluß durch das Zusatzventil unterbunden, und der Innenraum 28 des Gehäuses bzw. der Totraum 16 ist sowohl von der Zuströmseite 18 als auch von der Abströmseite 20 getrennt, denn der Kolben 96 verschließt jetzt die Mündungen der Kanäle 102, 106 und 112.

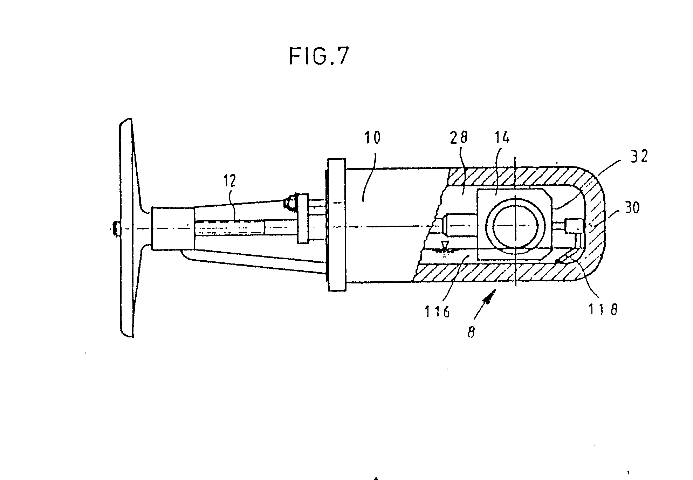

Während in den Figuren 1 bis 6 Absperrorgane in normaler Einbaulage mit vertikal nach oben zeigender Spindel dargestellt sind, zeigt Fig. 7 ein solches Absperrorgan, das mit horizontal verlaufender Spindel 12 eingebaut ist. Auch hier bildet sich im Innenraum 28 des Gehäuses ein Totraum 116, in dem sich beim Einsatz des Absperrorgans in Dampfleitungen Kondensat ansammeln kann. Naturgemäß ist diese Ansammlung gegenüber den Figuren 1 bis 6 an anderer Stelle. Die Konstruktionen gemäß den bis 6 an anderer Stelle. Die Konstruktionen gemäß den Figuren 1 bis 6 können jedoch leicht an diesen Fall angepaßt werden, in dem die enstprechenden Leitungen bzw. Anschlüsse auch hier jeweils bis zum tiefsten Bereich des Totraumes geführt werden, so daß Flüssigkeitsansammlungen restlos entfernt werden können. In Fig. 7 ist eine solche Leitung 118 zum tiefsten Bereich des Totraumes angedeutet. Wie sich aus vorstehendem ergibt, kann der Totraum je nach Einbaulage des Absperrorgans an verschiedener Stelle sein. Diese Stelle ist in der Regel der tiefste Bereich des Innenraums. Wichtig ist hierbei, daß die entsprechenden Leitungen zum Totraum führen, wie dies im Ausführungsbeispiel gemäß Fig. 7 gezeigt ist.

Ein Zusatzventil gemäß der Erfindung kann auch bei Absperrventilen Verwendung finden. In diesem Fall ist nach dem Vorbilde der Figuren 1 bis 7 das Zusatzventil anzuordnen und zur Betätigung mit dem Ventilteller in Wirkverbindung zu bringen.

Die einzelnen in Zusammenhang mit den Figuren beschriebenen Merkmale können auch in Kombination, so weit diese im Sinne der Erfindung wirkt, von erfindungswesentlicher Bedeutung sein.

Schließlich ist noch darauf hinzuweisen, daß der Durchgangs-Querschnitt des Zusatzventils und/oder der daran angeschlossenen Leitungen oder Kanäle nur so groß sein soll, daß bei geöffnetem Zusatzventil kein oder höchstens geringer Druckausgleich zwischen der Anströmseite und der Abströmseite auftritt. Ein wesentlicher Druckausgleich würde nämlich die Ausbildung einer Strömung durch den Bypass ungünstig beeinflussen. Der Durchgangsquerschnitt des Bypasses ist - mit Ausnahme des Totraums - etwa ein Zehntel bis ein Vierzigstel, vorzugsweise ein Zwanzigstel bis ein Dreißigstel des Durchflußquerschnittes des Absperrorgans.

A n s p r ü c h e

1. Absperrorgan, insbesondere Absperrschieber, für gasförmige, vorzugsweise kondensierbare Medien, mit einem in einem Gehäuse (10) bewegbaren Absperrkörper (14), der in Schließstellung die Zuströmseite (18) des Absperrorgans von der Abströmseite (20) trennt, in Offenstellung dagegen verbindet, sowie mit einem im Innenraum (28) des Absperrorgans (8) vorhandenen Totraum (26,116) dadurch gekennzeichnet, daß das Absperrorgan (8) in seinem Gehäuse (10) wenigstens ein Zusatzventil (30, 74, 88) aufweist, das in einem von der Zuströmseite (18) durch den Totraum (26,116) zur Abströmseite (20) führenden Bypass eingeschaltet und zur Steuerung mit dem Absperrkörper (14) derart verbunden ist, daß das Zusatzventil (30, 74, 88) in Schließstellung des Absperrkörpers (14) ebenfalls geschlossen ist, bei der Öffnungsbewegung des Absperrkörpers (14) dagegen noch vor einer Freigabe oder zumindest vor einer wesentlichen Freigabe des Absperrorgan-Durchflusses geöffnet ist.

2. Absperrorgan nach Anspruch 1, dadurch gekennzeichnet, daß das Zusatzventil (30, 74, 88) im Innenraum (28) angeordnet und von der Unterkante (32) des Absperrkörpers (14), bezogen auf eine Lage mit vertikal nach oben zeigender Betätigungs-Spindel (12), gesteuert ist.

3. Absperrorgan nach Anspruch 1 oder 2 mit Druckausgleich zwischen Anströmseite (18) und Innenraum (28) bzw. Totraum (26), dadurch gekennzeichnet, daß das Zusatzventil (30) einen mit dem tiefsten Bereich des Totraums (26) verbundenen Einlaßkanal (42) sowie eine
zur Abströmseite (20) führende Auslaßleitung (36)
aufweist.

4. Absperrorgan nach Anspruch 3, dadurch gekennzeichnet, daß das Zusatzventil (30) einen mit dem
Einlaßkanal (36) koaxialen, zylindrischen Absperrkolben
(40) aufweist, dessen auf den Einlaßkanal (36) ausgerichtetes Ende kreiskegelförmig ausgebildet und auf
einem am oberen Ende des Einlaßkanals (42) angeordneten
Kolbensitz (44) aufsitzt, wobei ein Auslaßkanal im
Bereich des Kolbensitzes (44) angeordnet und quer nach
außen gerichtet ist und in eine zur Abströmseite (20)
führende Auslaßleitung (36) übergeht, und daß das obere
Ende des Absperrkolbens (40) unter Abdichtung in den
Totraum (26) geführt und unter Einschaltung eines
elastischen Zwischengliedes (34) mit der unteren Kante
(32) des Absperrkörpers in dessen Schließstellung in
Berührung steht.

5. Absperrorgan nach Anspruch 4, dadurch gekennzeichnet, daß das elastische Zwischenglied (34) einen am
oberen Ende des Absperrkolbens (40) angeordneten Federteller (52) aufweist, der einen nach oben weisenden Rand
(54) und einen nach unten weisenden Rand (56) für die
Führung von Schraubenfedern (58, 60) aufweist, von denen
eine erste Schraubenfeder (58) zwischen den Federteller
(52) und das Ventilgehäuse (38) eingefügt ist, daß eine
zweite Schraubenfeder (60) zwischen den Federteller (52)
und einem koaxialen Stößel (62) angeordnet ist, wobei
der Stößel (62) mit dem unteren Rand (32) des Absperrkörpers (14) in Berührung steht und daß die erste
Schraubenfeder (58) eine größere Federkonstante als die
zweite Schraubenfeder (60) aufweist (Fig. 2).

6. Absperrorgan nach Anspruch 1 oder 2, dadurch gekennzeichnet, daß das Zusatzventil (74) einen in einem Zylinder (80) geführten Kolben (78) aufweist, dessen vertikal nach oben ragende Kolbenstange (82) mit der Unterkante (32) des Absperrkörpers in Berührung steht, wobei der Innenraum (84) des Zylinders im Bodenbereich durch eine offene Druckleitung (76) mit der Zuströmseite (18) verbunden ist und im oberen Bereich eine Öffnung (86) zum Totraum (16) aufweist, und daß der tiefste Bereich des Totraums (16) über eine offene Leitung (72) mit der Abströmseite (20) verbunden ist (Fig. 3 und 4).

7. Absperrorgan nach Anspruch 1 oder 2, dadurch gekennzeichnet, daß das Zusatzventil (88) einen in einem Zylinder (94) geführten Kolben (96) aufweist, dessen nach oben ragende Kolbenstange (98) mit der Unterkante (32) des Absperrkörpers (14) in Berührung steht, wobei der Innenraum (100) des Zylinders im Bodenbereich durch eine offene Druckleitung (90) mit der Zuströmseite (18) verbunden ist und im oberen Bereich einen Auslaßkanal (102) zum Totraum (16) aufweist und daß eine Ausströmöffnung (104) ebenfalls im oberen Bereich des Innenraums angeordnet und eine Leitung (106) zur Abströmseite (20) aufweist, und daß neben der Ausströmöffnung (104) die Öffnung (110) eines zum tiefsten Bereich des Totraums (26) führenden Kanals (112) angeordnet ist, wobei die Öffnung (110) sowie die Ausströmöffnung (104) durch einen im Kolben (96) ausgesparten Raum (114) verbindbar sind (Figuren 5 und 6).

FIG.1

FIG.2

0096268

FIG.4

FIG.3

FIG.6

FIG.5

FIG.7